(19) Europäisches Patentamt / European Patent Office / Office européen des brevets

(11) **EP 4 672 160 A1**

(12) **EUROPEAN PATENT APPLICATION**
published in accordance with Art. 153(4) EPC

(43) Date of publication:
**31.12.2025 Bulletin 2026/01**

(21) Application number: **24774187.9**

(22) Date of filing: **21.03.2024**

(51) International Patent Classification (IPC):
***G06T 17/20*** *(2006.01)*

(86) International application number:
**PCT/CN2024/082859**

(87) International publication number:
**WO 2024/193622 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2023 CN 202310310058**

(71) Applicant: **HUAWEI TECHNOLOGIES CO., LTD.**
**Shenzhen, Guangdong 518129 (CN)**

(72) Inventors:
• **BAI, Dongfeng**
**Shenzhen, Guangdong 518129 (CN)**
• **QI, Dexin**
**Shenzhen, Guangdong 518129 (CN)**
• **LIU, Bingbing**
**Shenzhen, Guangdong 518129 (CN)**

(74) Representative: **Goddar, Heinz J. et al**
**Boehmert & Boehmert**
**Anwaltspartnerschaft mbB**
**Pettenkoferstrasse 22**
**80336 München (DE)**

(54) **THREE-DIMENSIONAL CONSTRUCTION NETWORK TRAINING METHOD AND APPARATUS, AND THREE-DIMENSIONAL MODEL GENERATION METHOD AND APPARATUS**

(57) This application provides a three-dimensional construction network training method and apparatus, and a three-dimensional model generation method and apparatus in the field of computer vision, to perform joint training based on a plurality of frames of images and radar point cloud data to obtain a three-dimensional construction network. More accurate depths included in the radar point cloud data may be used as deep supervision. In this way, the three-dimensional construction network can output a more accurate three-dimensional model. The method includes: obtaining the plurality of frames of images and a photographing parameter used by a camera device when the plurality of frames of images are photographed, where the plurality of frames of images include images photographed from a plurality of views; obtaining the radar point cloud data including photographing scenario data; and obtaining the three-dimensional construction network based on the plurality of frames of images, the photographing parameter, and the radar point cloud data. The radar point cloud data is used as deep supervision during three-dimensional construction of the three-dimensional construction network. In this way, depths of the three-dimensional model output by the three-dimensional construction network can be constrained to be closer to depths corresponding to an actual application scenario.

FIG. 5

Obtain a plurality of frames of images and a photographing parameter — 501

Obtain radar point cloud data — 502

Obtain a three-dimensional construction network through training based on the plurality of frames of images, the photographing parameter, and the radar point cloud data — 503

**Description**

This application claims priority to Chinese Patent Application No. 202310310058.5, filed with the China National Intellectual Property Administration on March 21, 2023 and entitled "THREE-DIMENSIONAL CONSTRUCTION NETWORK TRAINING METHOD AND APPARATUS, AND THREE-DIMENSIONAL MODEL GENERATION METHOD AND APPARATUS", which is incorporated herein by reference in its entirety.

**TECHNICAL FIELD**

This application relates to the field of computer vision, and in particular, to a three-dimensional construction network training method and apparatus, and a three-dimensional model generation method and apparatus.

**BACKGROUND**

Three-dimensional models need to be constructed in a plurality of scenarios. For example, in a scenario like an autonomous driving scenario, an AR scenario, or a VR scenario, a three-dimensional model needs to be rendered. In some three-dimensional scene modeling and rendering solutions, a model of a three-dimensional scene may be output by using a trained model. However, a color value, a depth, or the like of each point in the three-dimensional scene needs to be fitted by the model and then output. In this case, prediction may be inaccurate. Therefore, how to improve accuracy of three-dimensional scene construction becomes an urgent problem to be resolved.

**SUMMARY**

This application provides a three-dimensional construction network training method and apparatus, and a three-dimensional model generation method and apparatus, to perform joint training based on a plurality of frames of images and radar point cloud data to obtain a three-dimensional construction network. More accurate depths included in the radar point cloud data may be used as deep supervision. In this way, the three-dimensional construction network can output a more accurate three-dimensional model.

In view of this, according to a first aspect, this application provides a three-dimensional construction network training method, including: obtaining a plurality of frames of images and a photographing parameter used by a camera device when the plurality of frames of images are photographed, where the plurality of frames of images include images photographed from a plurality of views; obtaining radar point cloud data, where a capture scenario in which a radar captures the radar point cloud data has an intersection with a photographing scenario in which the camera device photographs the plurality of frames of images; and obtaining a three-dimensional construction network based on the plurality of frames of images, the photographing parameter, and the radar point cloud data. The three-dimensional construction network may be a network constructed based on a neural radiance field (neural radiance field, NeRF). The three-dimensional construction network may be used to perform three-dimensional construction based on input data to output a three-dimensional model. The radar point cloud data is used as deep supervision during three-dimensional construction of the three-dimensional construction network. In this way, depths of the three-dimensional model output by the three-dimensional construction network can be constrained to be closer to depths corresponding to an actual application scenario.

Therefore, in this implementation of this application, the information captured by the radar is used as deep supervision of the model, to obtain the more accurate depths. In this way, the three-dimensional model obtained through construction is more accurate. In addition, the three-dimensional model may be constructed by using a real photographing scenario. Compared with constructing the three-dimensional model by using a manually constructed image, the three-dimensional model output by the three-dimensional construction network obtained in this application is more realistic.

In a possible implementation, the obtaining the three-dimensional construction network based on the plurality of frames of images, the photographing parameter, and the radar point cloud data may include: first constructing a virtual camera based on the plurality of frames of images and the photographing parameter, to obtain virtual camera data, where the virtual camera data includes an image at a view different from the plurality of views; and then performing iterative training on an initial model to obtain the three-dimensional construction network by using the virtual camera data as an input of the three-dimensional construction network and using the radar point cloud data as deep supervision of the three-dimensional construction network.

Therefore, in this implementation of this application, images at different views may be generated by constructing the virtual camera, to increase a view input during training of the three-dimensional construction network. This is equivalent to enriching training data, so that a convergence result of the three-dimensional construction network is better, and output accuracy of the three-dimensional construction network is improved.

In a possible implementation, the constructing the virtual camera based on the plurality of frames of images and the photographing parameter, to obtain the virtual camera data includes: obtaining a pose parameter of each frame of image in the plurality of frames of images; projecting the plurality of frames of images into same space based on a pose of each frame of image, to obtain image point cloud data; and projecting the image point cloud data based on an enhanced view to obtain the virtual camera data, where the enhanced view is a view different from the plurality of views.

Therefore, in this implementation of this application, a virtual view may be constructed based on similarity between pixels at different views in space, to generate the images at different views. This increases the view input during training of the three-dimensional construction network, and improves output accuracy of the three-dimensional construction network.

In a possible implementation, the using the radar point cloud data as deep supervision of the three-dimensional construction network includes: fusing the radar point cloud data and the image point cloud data to obtain depths of a plurality of pixels; and using the depths of the plurality of pixels as deep supervision during three-dimensional construction of the three-dimensional construction network.

Therefore, in this implementation of this application, the radar point cloud data may be added as deep supervision for training the three-dimensional construction network, so that depths output by the three-dimensional construction network are constrained in a process of training the three-dimensional construction network, and the depths of the three-dimensional model output by the three-dimensional construction network are closer to real depths. Therefore, the output three-dimensional model is more realistic.

In a possible implementation, any one time of iterative training in the iterative training may include: obtaining at least one first sampling point on a first ray in a first view in a three-dimensional model output by a three-dimensional construction network obtained through a previous iteration; obtaining at least one second sampling point on a second ray in a second view of the three-dimensional model, where the at least one second sampling point is a point obtained by projecting the at least one first sampling point on the second ray, and the first view and the second view are any different views in the three-dimensional model; obtaining a difference between the first sampling point and the second sampling point; and updating the three-dimensional construction network based on the difference, to obtain a three-dimensional construction network updated in a current iterative update.

In this implementation of this application, in the process of training the three-dimensional construction network, for a three-dimensional model output in each iteration of the three-dimensional construction network, rays in different views may be captured, and the rays in the different views are projected, to obtain points that need to overlap between the rays in the different views based on spatial geometric consistency, an output error of the three-dimensional construction network is determined based on a projection result, and the three-dimensional construction network is updated, so that a finally obtained output result of the three-dimensional construction network better complies with spatial geometric consistency.

In a possible implementation, the obtaining the difference between the first sampling point and the second sampling point includes: obtaining a first depth estimate of the first sampling point and a second depth estimate of the second sampling point; and obtaining a difference between the first depth estimate and the second depth.

In this implementation of this application, a geometric consistency-based reprojection error may be calculated from a depth dimension, to supervise an output result of the three-dimensional construction network from a depth location. This improves output accuracy of the three-dimensional construction network.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;
the first geometric module and the second geometric module are configured to perform geometric construction based on the input data, to output a geometric structure of a three-dimensional scene, where output precision of the second geometric module is higher than output precision of the first geometric module; and
the first color module and the second color module are configured to perform color construction based on the input data, to output a color value of each pixel in the three-dimensional scene, where output precision of the second color module is higher than output precision of the first color module, and an input of the first color module includes an input of the first geometric module.

Therefore, in this implementation of this application, high-precision geometric and color construction modules and low-precision geometric and color construction modules are separately disposed, and the high-precision color module and the high-precision geometric module are decoupled, so that parallel construction of geometry and color can be implemented, and output precision and output efficiency of the model can be improved.

In a possible implementation, the input of the first color module and an input of the second color module each further include a depth, and the depth includes a value obtained based on the radar point cloud data, and may further include a depth obtained by another module in the three-dimensional construction network through prediction. Therefore, in the training process, the depth may be further used as an input of the color module, so that the color module can construct a color based on the depth. This improves output accuracy of the color module.

In a possible implementation, the method may further include: obtaining an input pose and a camera parameter; and obtaining an output image from the three-dimensional scene based on the input pose and the camera parameter.

In a possible implementation, the three-dimensional model output by the three-dimensional construction network is applied to autonomous driving of a vehicle. Therefore, autonomous driving can be performed based on a more real three-dimensional model. This improves driving safety.

According to a second aspect, this application provides a three-dimensional model generation method, including: first obtaining input view information, such as a view pose and a camera parameter; and then outputting a three-dimensional model by using the input view information as an input of a three-dimensional construction network, where the three-dimensional construction network is obtained based on a plurality of frames of images, a photographing parameter, radar point cloud data, and the three-dimensional construction network, the photographing parameter is a parameter used by a camera device when the plurality of frames of images are photographed, the plurality of frames of images include images photographed from a plurality of views, the radar point cloud data is data captured by a radar, and a capture scenario in which the radar captures the radar point cloud data has an intersection with a photographing scenario in which the camera device photographs the plurality of frames of images.

In this implementation of this application, when the three-dimensional construction network is trained, information captured by the radar may be used as deep supervision of a model, to obtain more accurate depths. In this way, the three-dimensional model obtained through construction is more accurate. In addition, the three-dimensional model may be constructed by using a real photographing scenario. Compared with constructing the three-dimensional model by using a manually constructed image, the three-dimensional model output by the three-dimensional construction network obtained in this application is more realistic.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;

the first geometric module and the second geometric module are configured to perform geometric construction based on input data, to output a geometric structure of the three-dimensional model, where output precision of the second geometric module is higher than output precision of the first geometric module; and

the first color module and the second color module are configured to perform color construction based on input data, to output a color value of each pixel in the three-dimensional model, where output precision of the second color module is higher than output precision of the first color module, and an input of the first color module includes an input of the first geometric module.

Optionally, for a training process of the three-dimensional construction network, refer to the training process in any one of the first aspect or the optional implementations of the first aspect. Details are not described herein again.

According to a third aspect, this application provides a three-dimensional construction network training apparatus, including:

an image capture module, configured to obtain a plurality of frames of images and a photographing parameter used by a camera device when the plurality of frames of images are photographed, where the plurality of frames of images include images photographed from a plurality of views;

a radar capture module, configured to obtain radar point cloud data, where a capture scenario in which a radar captures the radar point cloud data has an intersection with a photographing scenario in which the camera device photographs the plurality of frames of images; and

a processing module, configured to obtain a three-dimensional construction network based on the plurality of frames of images, the photographing parameter, and the radar point cloud data, where the three-dimensional construction network is used to perform three-dimensional construction based on input data to output a three-dimensional model, and the radar point cloud data is used as deep supervision during three-dimensional construction of the three-dimensional construction network.

In a possible implementation, the processing module is specifically configured to: construct a virtual camera based on the plurality of frames of images and the photographing parameter, to obtain virtual camera data, where the virtual camera data includes an image at a view different from the plurality of views; and perform iterative training on an initial model to obtain the three-dimensional construction network by using the virtual camera data as an input of the three-dimensional construction network and using the radar point cloud data as deep supervision of the three-dimensional construction network.

In a possible implementation, the processing module is specifically configured to: obtain a pose parameter of each frame of image in the plurality of frames of images; project the plurality of frames of images into same space based on a pose of each frame of image, to obtain image point cloud data; and project the image point cloud data based on an enhanced view to obtain the virtual camera data, where the enhanced view is a view different from the plurality of views.

In a possible implementation, the processing module is specifically configured to: fuse the radar point cloud data and the image point cloud data to obtain depths of a plurality of pixels; and use the depths of the plurality of pixels as deep supervision during three-dimensional construction of the three-dimensional construction network.

In a possible implementation, any one time of iterative training in the iterative training may include: obtaining at least one first sampling point on a first ray in a first view in a three-dimensional model output by a three-dimensional construction network obtained through a previous iteration; obtaining at least one second sampling point on a second ray in a second view of the three-dimensional model, where the at least one second sampling point is a point obtained by projecting the at least one first sampling point on the second ray, and the first view and the second view are any different views in the three-dimensional model; obtaining a difference between the first sampling point and the second sampling point; and updating the three-dimensional construction network based on the difference, to obtain a three-dimensional construction network updated in a current iterative update.

In a possible implementation, the processing module is specifically configured to: obtain a first depth estimate of the first sampling point and a second depth estimate of the second sampling point; and obtain a difference between the first depth estimate and the second depth.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;
the first geometric module and the second geometric module are configured to perform geometric construction based on the input data, to output a geometric structure of a three-dimensional scene, where output precision of the second geometric module is higher than output precision of the first geometric module; and
the first color module and the second color module are configured to perform color construction based on the input data, to output a color value of each pixel in the three-dimensional scene, where output precision of the second color module is higher than output precision of the first color module, and an input of the first color module includes an input of the first geometric module.

In a possible implementation, the input of the first color module and an input of the second color module each further include deep supervision obtained based on the radar point cloud data.

In a possible implementation, the apparatus further includes:

an input module, configured to obtain an input pose and a camera parameter; and
an output module, configured to obtain an output image from the three-dimensional scene based on the input pose and the camera parameter.

In a possible implementation, the three-dimensional model output by the three-dimensional construction network may be applied to autonomous driving of a vehicle.

According to a fourth aspect, this application provides a three-dimensional model generation apparatus, including:

an input module, configured to obtain input view information; and
an output module, configured to output a three-dimensional model by using the input view information as an input of a three-dimensional construction network, where the three-dimensional construction network is obtained based on a plurality of frames of images, a photographing parameter, radar point cloud data, and the three-dimensional construction network, the photographing parameter is a parameter used by a camera device when the plurality of frames of images are photographed, the plurality of frames of images include images photographed from a plurality of views, the radar point cloud data is data captured by a radar, and a capture scenario in which the radar captures the radar point cloud data has an intersection with a photographing scenario in which the camera device photographs the plurality of frames of images.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;

the first geometric module and the second geometric module are configured to perform geometric construction based on input data, to output a geometric structure of the three-dimensional model, where output precision of the second geometric module is higher than output precision of the first geometric module; and

the first color module and the second color module are configured to perform color construction based on input data, to output a color value of each pixel in the three-dimensional model, where output precision of the second color module is higher than output precision of the first color module, and an input of the first color module includes an input of the first geometric module.

In a possible implementation, the apparatus may further include a training module. The training module is configured to perform training to obtain the three-dimensional construction network. For steps performed by the training module, refer to the descriptions of any one of the first aspect or the optional implementations of the first aspect. Details are not described herein again.

According to a fifth aspect, an embodiment of this application provides a three-dimensional construction network training apparatus, including a processor and a memory. The processor and the memory are interconnected through a line, and the processor invokes program code in the memory to perform a processing-related function in the three-dimensional construction network training method shown in any one of the first aspect. Optionally, the three-dimensional construction network training apparatus may be a chip.

According to a sixth aspect, an embodiment of this application provides a three-dimensional model generation apparatus, including a processor and a memory. The processor and the memory are interconnected through a line, and the processor invokes program code in the memory to perform a processing-related function in the three-dimensional model generation method shown in any one of the second aspect. Optionally, the three-dimensional model generation apparatus may be a chip.

According to a seventh aspect, an embodiment of this application provides a three-dimensional construction network training apparatus. The three-dimensional construction network training apparatus may also be referred to as a digital processing chip or a chip. The chip includes a processing unit and a communication interface. The processing unit obtains program instructions through the communication interface, and the program instructions are executed by the processing unit. The processing unit is configured to perform a processing-related function in any one of the first aspect or the optional implementations of the first aspect.

According to an eighth aspect, an embodiment of this application provides a three-dimensional model generation apparatus. The three-dimensional model generation apparatus may also be referred to as a digital processing chip or a chip. The chip includes a processing unit and a communication interface. The processing unit obtains program instructions through the communication interface, and the program instructions are executed by the processing unit. The processing unit is configured to perform a processing-related function in any one of the second aspect or the optional implementations of the second aspect.

According to a ninth aspect, an embodiment of this application provides a computer-readable storage medium, including instructions. When the instructions are run on a computer, the computer is enabled to perform the method in any optional implementation of the first aspect or the second aspect.

According to a tenth aspect, an embodiment of this application provides a computer program product including instructions. When the computer program product runs on a computer, the computer is enabled to perform the method in any optional implementation of the first aspect or the second aspect.

**BRIEF DESCRIPTION OF DRAWINGS**

FIG. 1 is a diagram of an artificial intelligence main framework to which this application is applied;
FIG. 2 is a diagram of an architecture of a system according to this application;
FIG. 3 is a diagram of a structure of a neural network according to an embodiment of this application;
FIG. 4 is a diagram of a computational mechanism of a neural network according to an embodiment of this application;
FIG. 5 is a schematic flowchart of a three-dimensional construction network training method according to an embodiment of this application;
FIG. 6 is a schematic flowchart of another three-dimensional construction network training method according to an embodiment of this application;
FIG. 7 is a schematic flowchart of another three-dimensional construction network training method according to an embodiment of this application;
FIG. 8 is a schematic flowchart of another three-dimensional construction network training method according to an embodiment of this application;

FIG. 9 is a schematic flowchart of another three-dimensional construction network training method according to an embodiment of this application;

FIG. 10 is a diagram of a structure of a three-dimensional construction network according to an embodiment of this application;

FIG. 11 is a diagram of a projection scenario of different views according to an embodiment of this application;

FIG. 12 is a schematic flowchart of another three-dimensional construction network training method according to an embodiment of this application;

FIG. 13 is a schematic flowchart of a three-dimensional model generation method according to an embodiment of this application;

FIG. 14 is a diagram of a structure of a three-dimensional construction network training apparatus according to an embodiment of this application;

FIG. 15 is a diagram of a structure of a three-dimensional model generation apparatus according to an embodiment of this application;

FIG. 16 is a diagram of a structure of another three-dimensional construction network training apparatus according to an embodiment of this application;

FIG. 17 is a diagram of a structure of another three-dimensional model generation apparatus according to an embodiment of this application; and

FIG. 18 is a diagram of a structure of a chip according to an embodiment of this application.

## DESCRIPTION OF EMBODIMENTS

The following describes technical solutions in embodiments of this application with reference to accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

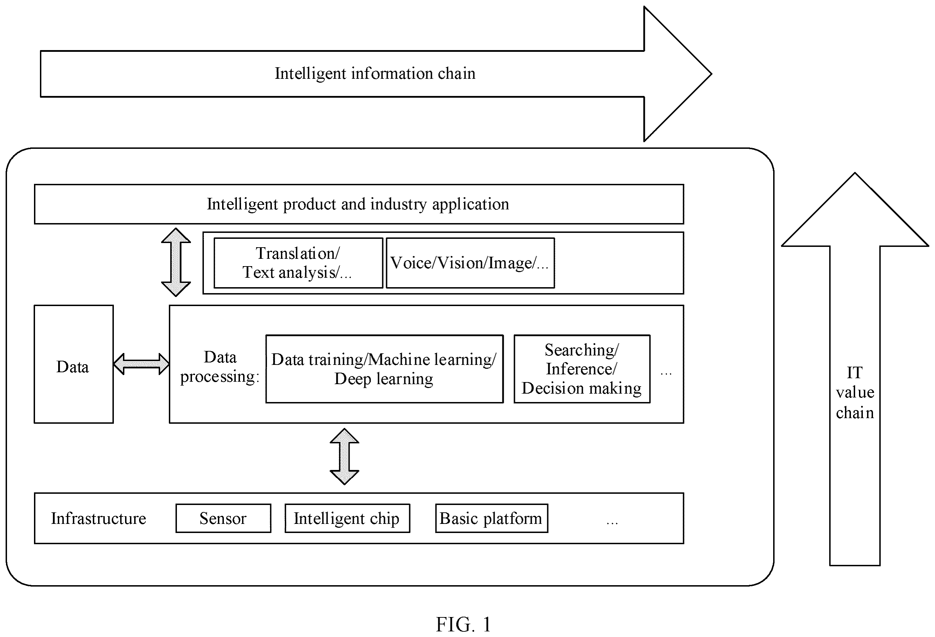

An overall working procedure of an artificial intelligence system is first described. FIG. 1 is a diagram of a structure of an artificial intelligence main framework. The following describes the artificial intelligence main framework from two dimensions: "intelligent information chain" (horizontal axis) and "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip, for example, a hardware acceleration chip like a central processing unit (central processing unit, CPU), a neural-network processing unit (neural-network processing unit, NPU), a graphics processing unit (English: graphics processing unit, GPU), an application-specific integrated circuit (application-specific integrated circuit, ASIC), or a field programmable gate array (field programmable gate array, FPGA). The basic platform includes related platforms, for example, a distributed computing framework and a network, for assurance and support. The basic platform may include a cloud storage and computing network, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

(4) General capability

After data processing mentioned above is performed on the data, some general capabilities may further be formed based on a data processing result. For example, the general capabilities may be an algorithm or a general system, for example, translation, text analysis, computer vision processing, speech recognition, and image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent product and industry application mainly include intelligent terminals, intelligent transportation, intelligent health care, autonomous driving, smart cities, and the like.

In some scenarios such as intelligent terminals, intelligent transportation, intelligent health care, autonomous driving, and smart cities, a model needs to be constructed. For example, in a process of constructing an AR map, point cloud data of the map may be captured by using a laser, and then the AR map is constructed based on the point cloud data. Alternatively, in an intelligent terminal, point cloud data of a currently photographed scene may be captured by using a camera, then a three-dimensional model in the current scene is constructed based on the point cloud data, and then the three-dimensional model is applied to image processing or a game of the terminal, to improve user experience. That is, a method provided in this application has value in terms of the AI system, terminal application, a cloud service, or the like.

In a plurality of application scenarios, three-dimensional reconstruction needs to be performed, to obtain a three-dimensional model that matches an environment. For example, in an autonomous driving scenario, an AR scenario, a VR scenario, or another scenario in which rendering needs to be performed, rendering may be performed based on an image, to obtain a more stereoscopic three-dimensional model.

With the rapid rise of a neural radiation field (neural radiance field, NeRF) in a computer vision direction, a three-dimensional model generation manner based on the neural radiation field also demonstrates unique advantages of the neural radiation field compared with other conventional methods in application scenarios such as autonomous driving, digital human, and three-dimensional scene modeling.

In a conventional three-dimensional scene modeling and rendering manner based on computer graphics (Computer Graphics), a model in a scene usually needs to be explicitly simulated, and the model in the three-dimensional scene is rendered into image data at a specific angle by using a rendering engine. A three-dimensional model generation method based on a computer graphics route requires a large quantity of manual modeling processes. Image generation quality depends on a fineness degree of a model in a scene and a capability of an image rendering engine. In addition, if a large quantity of images need to be generated, a large amount of art design investment and accumulation of three-dimensional assets are required. For an image generation route based on the neural radiation field, scene construction data of the image generation route is from data captured in a real scene. Therefore, scene reconstruction and image synthesis are more realistic. For an application such as autonomous driving that needs to generate a large quantity of images, a scale and diversity of a scene may increase exponentially with an amount of captured data. The neural radiation field (NeRF) is an emerging method for scene expression and image rendering. In this method, a scene expression is recorded in a deep neural network in an implicit expression manner, the deep neural network is used to implicitly learn a static three-dimensional scene, and tasks such as three-dimensional reconstruction and novel view synthesis (Novel View Synthesis) of the scene are indirectly completed.

Generally, an input of the NeRF is a group of image data whose camera parameters are known and that is of a plurality of views, and a static three-dimensional scene is implicitly learned based on these images by using a neural network. The neural network obtained through training performed based on these images is combined with a volume rendering technology, so that corresponding image data and corresponding spatial depth information can be inferred and rendered from any novel view. The volume rendering technology refers to calculating an occupancy degree and color information of space along any light ray emitted from a camera view in a scene, accumulating occupancy information and color information of all points on the ray in an integral form, and finally obtaining color and depth information of a pixel corresponding to the light ray.

For example, an image may be generated by using a NeRF framework. An underlying continuous volumetric scene function may be optimized by inputting a sparse view set, to synthesize novel views in a complex scene. This manner indicates a scenario in which a fully connected (non-convolutional) deep network is used. An input of the deep network is single continuous 5D coordinates (spatial location (x, y, z) and a viewing direction $(\theta, \varphi)$). An output of the deep network is volume density of the spatial location and color information related to a view. Views are synthesized by querying the 5D coordinates along a camera light ray, and output color and density are projected into an image using a classic volume rendering technology. Since volume rendering is naturally differentiable, an only input required for optimization is a group of images with known camera poses. However, in this image generation manner, a direct input of a network is a sampling point on a ray on which positional encoding is performed on an image, and network optimization is also that each sampling point is separately trained and estimated by the network. When a data view is sparse (for example, in an autonomous driving scenario or an outdoor large scenario), it is usually difficult to restore good geometric information. In addition, geometric consistency between pixel ray sampling points of an image is not well constrained. A depth output of the network is obtained in an integral form and in a volume rendering manner. A depth prediction value is rough, and therefore effect during novel view synthesis is usually poor.

For another example, in some NeRF network-based generation manners, indoor RGB images may be synthesized from a sparse input view. The sparse input view causes a small quantity of input images used to train the NeRF network. Preprocessing is performed by using a structure from motion (structure from motion, SFM) algorithm, to obtain pose data and a sparse feature point cloud that correspond to input images. Second, in this method, a dense depth map and depth uncertainty of the dense depth map are obtained by using a depth completion network based on the sparse point cloud obtained through preprocessing, to guide training of the NeRF network. However, although depth prior information is introduced, dense depth information is from the depth completion network, the depth information is highly uncertain, and obtaining of the depth information is limited by the depth completion network (for example, a depth completion network needs to be trained first). In addition, a plurality of views are independently trained, and no consistency constraint is obtained for geometric structures of the plurality of views in global space.

Therefore, this application provides a three-dimensional construction network training method and a three-dimensional model generation method, to learn, based on data captured by a plurality of types of sensors, a NeRF-based network architecture to generate a more accurate three-dimensional model, so that an accurate image can be generated from each view based on the accurate three-dimensional model.

Specifically, this application provides a three-dimensional construction network training method. A plurality of frames of images photographed from a plurality of views in an actual scenario and a corresponding photographing parameter may be captured, and radar point cloud data may be captured by a radar. An electromagnetic wave may be sent in a same scenario by using the radar, and the radar point cloud data is generated based on a received echo signal. A three-dimensional scene is then generated based on the plurality of frames of images, the corresponding photographing parameter, radar echo data, and a three-dimensional construction network. The three-dimensional construction network may be used to perform three-dimensional construction based on input data, and the radar point cloud data may be used as deep supervision during three-dimensional reconstruction to improve depth accuracy of each pixel in the three-dimensional scene.

According to the three-dimensional model generation method provided in this application, the three-dimensional model may be output based on the three-dimensional construction network obtained according to the foregoing three-dimensional construction network training method, to obtain an image of a required view from the three-dimensional model.

The foregoing three-dimensional construction network training method may be understood as a training process, and the three-dimensional model generation method may be understood as an inference side. The three-dimensional construction network training method and the three-dimensional model generation method provided in this application may be applied to a terminal, a server, a cloud platform, or the like. For example, the three-dimensional construction network training method provided in this application may be deployed on the cloud platform, the three-dimensional construction network is trained and output by using the cloud platform, the three-dimensional construction network may be delivered and deployed in the terminal, and the terminal may output the three-dimensional model by using the three-dimensional construction network, and capture the image of the required view from the three-dimensional model. Alternatively, after obtaining the three-dimensional construction network through training, the cloud platform may deliver, to the terminal, the three-dimensional model output by the three-dimensional construction network, and the terminal may capture the image of the required view from the three-dimensional model.

The following describes some possible system architectures provided in this application by using examples.

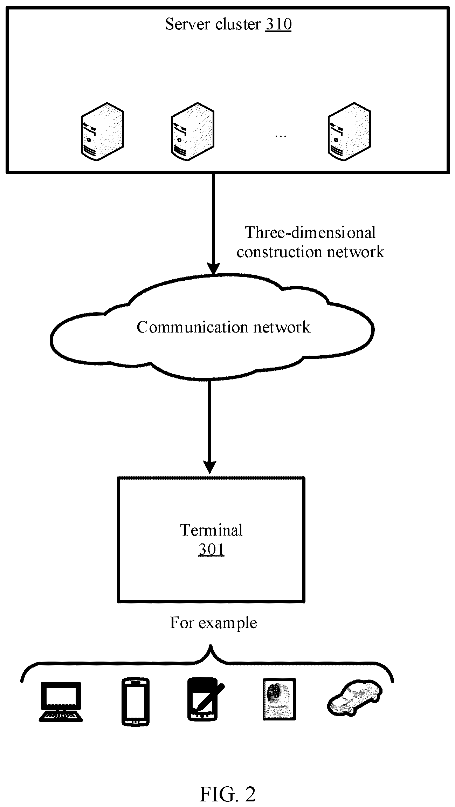

For example, as shown in FIG. 2, the three-dimensional construction network training method provided in this application may be performed by a server cluster 310. To be specific, a three-dimensional construction network is trained, and a trained three-dimensional construction network is sent to a terminal 301 over a communication network, to deploy the three-dimensional construction network in the terminal 301. The terminal may input a camera pose or a camera parameter of any position or angle, to infer, by using the three-dimensional construction network, a three-dimensional model corresponding to a scene in the camera pose. When the terminal includes a vehicle, the three-dimensional model may be used for autonomous driving, real-time navigation, and the like of the vehicle, or the three-dimensional model may be applied to an AR game of the terminal, so that the AR game can be combined with a real scene in which a user is located, thereby improving user experience.

For example, the three-dimensional construction network training method provided in this application may be performed by a server, and the three-dimensional construction network obtained through training may be deployed on the server. The server may be configured to perform the three-dimensional construction network training method provided in this application. The server may receive radar point cloud data, a plurality of frames of images, a corresponding photographing parameter, and the like that are sent by a client, or extract radar point cloud data, a plurality of frames of images, a corresponding photographing parameter, and the like from locally stored data, and then obtain the three-dimensional construction network through training according to the three-dimensional construction network training method provided in this application. If the point cloud data is sent by the client to the server, the server may feed back the three-dimensional construction network obtained through training to the client.

Embodiments of this application relate to related applications of a neural network and the image field. To better understand the solutions of embodiments of this application, the following first describes related terms and concepts of the neural network that may be used in embodiments of this application.

(1) Neural radiance field (neural radiance field, NeRF)

A scene expression is recorded in a deep neural network in an implicit expression manner, the deep neural network is used to implicitly learn a static three-dimensional scene, and tasks such as three-dimensional reconstruction and novel view synthesis (Novel View Synthesis) of the scene are indirectly completed.

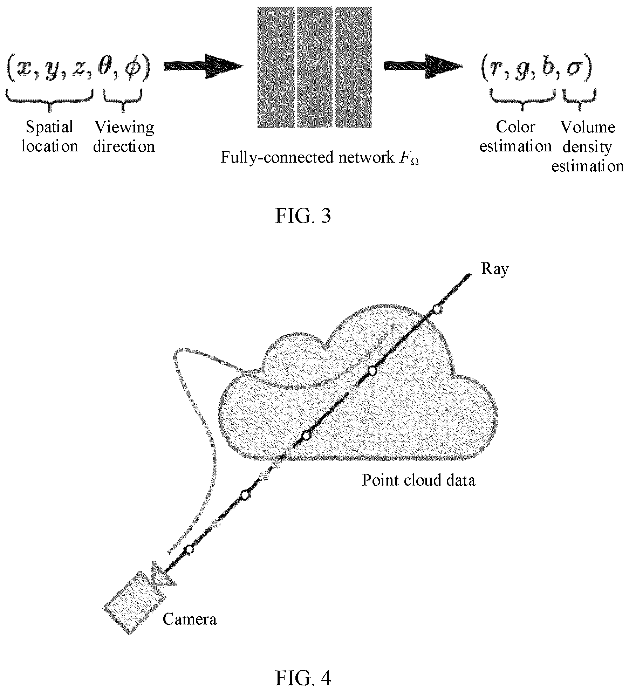

As shown in FIG. 3, an input of the NeRF is a group of image data whose camera parameters are known (intrinsic camera parameters and camera poses) (the data need to be at a plurality of views), and a static three-dimensional scene is implicitly learned based on these images by using a neural network. The neural network obtained through training performed based on these images is combined with a volume rendering technology, so that corresponding image data and corresponding spatial depth information can be inferred and rendered from any novel view. The volume rendering technology refers to calculating an occupancy degree and color information of space along any light ray emitted from a camera view in a scene, accumulating occupancy information and color information of all points on the ray in an integral form, and finally obtaining color and depth information of a pixel corresponding to the light ray. As shown in FIG. 4, an actual implementation process is to implement discrete sample space modeling by sampling limited sampling points on a ray and accumulating the sampling points. For a pinhole camera model, all pixels in an image may be accumulated for training and inference in this volume rendering manner.

It should be noted that the three-dimensional construction network provided in this application may be a network constructed based on the NeRF, and may be used to output a rendered three-dimensional model.

(2) Loss function (loss function): The loss function may also be referred to as a cost function (cost function), and is a measure for comparing a difference between a predicted output of a machine learning model for a sample and a real value (which may also be referred to as a supervised value) of the sample, in other words, the loss function is used to measure the difference between the predicted output of the machine learning model for the sample and the real value of the sample. The loss function may generally include a mean squared error, a cross entropy loss function, a logarithmic loss function, an exponential loss function, and other loss functions. For example, the mean squared error may be used as the loss function, which is defined as $mse = \frac{1}{N}\sum_{n=1}^{N}(y_n - \hat{y}_n)^2$. Specifically, a specific loss function may be selected based on an actual application scenario.

It may be understood that, a training process of the neural network is learning a manner of controlling space transformation, more specifically, learning a weight matrix. A purpose of training the neural network is to make an output of the neural network close to an expected value to the greatest extent. Therefore, a weight vector of each layer in the neural network may be updated by comparing a predicted value with the expected value of the current network and then based on a difference between the two values (certainly, the weight vector may be usually initialized first before the first update, that is, a parameter is preconfigured for each layer in the deep neural network). For example, if the predicted value of the network is excessively high, a value of a weight in a weight matrix is adjusted to reduce the predicted value, and adjustment is continuously performed until a value output by the neural network is close to the expected value or equal to the expected value. Specifically, the difference between the predicted value and the expected value of the neural network may be measured by using a loss function (loss function) or an objective function (objective function). The loss function is used as an example. A higher output value (loss) of the loss function indicates a larger difference. Training of the neural network may be understood as a process of minimizing the loss. For a process of updating a weight of a start point network and training a serial network in the following implementations of this application, refer to this process. Details are not described below again.

(3) Gradient: The gradient is a derivative vector of a loss function about a parameter.
(4) Back propagation (back propagation, BP): Back propagation is an algorithm for calculating a model parameter gradient based on a loss function and updating a model parameter.
(5) Point cloud: The point cloud is data formed by a plurality of points, and each point has corresponding information, such as depth, brightness, or intensity.
(6) RGB (red green blue)

RGB represents colors of red, green, and blue channels. A plurality of colors may be obtained by changing and overlaying the colors of the red (R), green (G), and blue (B) channels.

This application provides a three-dimensional construction network training method and a three-dimensional model generation method. It may be understood that the three-dimensional construction network training method and the three-dimensional model generation method provided in this application are respectively a training phase and an inference phase. In the training phase, an input view for training a three-dimensional construction network is increased by constructing a virtual view, and radar point cloud data is used as deep supervision, to obtain a more accurate three-dimensional construction network through training. In the inference phase, a prediction result of the three-dimensional construction network obtained in the training phase may be used to perform three-dimensional reconstruction, to obtain a more accurate three-dimensional model.

The training phase and the inference phase may be deployed in a same device, or may be deployed in different devices. For example, the training phase may be performed on a cloud platform or a server. Training data may be captured by a client, and the three-dimensional construction network obtained through training may be delivered and deployed on the client, so that the client outputs the more accurate three-dimensional model. For another example, both the training phase and the inference phase may be deployed in a local terminal. The terminal may capture a plurality of frames of images and the radar point cloud data, to obtain the three-dimensional construction network through training, and then output a three-dimensional model at any view or pose by using the trained three-dimensional construction network.

The following separately describes the method provided in this application in different phases such as the training phase and the inference phase. The training phase is the neural network training method provided in this application, and the inference phase is a process of the three-dimensional model generation method provided in this application.

1. Training phase

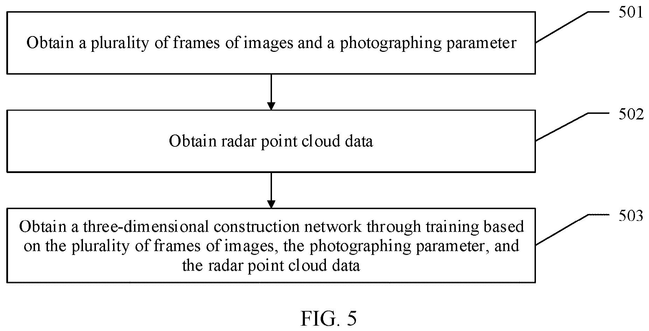

FIG. 5 is a schematic flowchart of a three-dimensional construction network training method according to this application. Details are as follows:

501: Obtain a plurality of frames of images and a photographing parameter.

The plurality of frames of images may be photographed from a plurality of views by using a camera device, and one or more frames of images may be photographed from each view. The photographing parameter is a photographing parameter used when the camera device photographs the plurality of frames of images, and may specifically include a parameter like an intrinsic camera parameter or a camera pose. For example, the intrinsic camera parameter may include a preset parameter, for example, information such as a pixel, resolution, and a focal length of a camera, and the camera pose may be determined by using a camera coordinate system and a world coordinate system.

For example, when the method provided in this application is deployed in a vehicle, the camera device may include a camera disposed in the vehicle, a camera in a same scene as the vehicle, another camera-enabled terminal, or the like.

The plurality of frames of images may be specifically images captured in a real scene by using an RGB image camera, a depth image camera, an event image camera, or another type of camera. This may be specifically adjusted based on an actual application scenario. This is not limited in this application. An RGB image mentioned below in this application may alternatively be replaced with a depth image, an event image, or the like. Details are not described below.

502: Obtain radar point cloud data.

The radar point cloud data may include data captured by a radar. For example, the radar may transmit an electromagnetic wave like a scene in which three-dimensional construction needs to be performed, receive an echo signal, and generate the radar point cloud data based on the echo signal. The radar point cloud data may include depth information of a plurality of points in the scene.

It should be noted that a sequence of performing step 501 and step 502 is not limited in this application. Step 501 may be performed first, or step 502 may be performed first, or step 501 and step 502 may be performed simultaneously, which is specifically determined based on an actual application scenario.

503: Obtain a three-dimensional construction network through training based on the plurality of frames of images, the photographing parameter, and the radar point cloud data.

Then, an initial three-dimensional construction network may be trained based on the plurality of frames of images, the photographing parameter, and the radar point cloud data, to obtain the trained three-dimensional construction network. The trained three-dimensional construction network may be used to output a three-dimensional scene at any view. The radar point cloud data may be used to perform deep supervision when the three-dimensional construction network is trained, to improve accuracy of depths of a three-dimensional scene output by the trained three-dimensional construction network.

Therefore, in this implementation of this application, the three-dimensional construction network may be trained based on the images of the plurality of views captured in the real scene and the photographing parameter, and deep supervision is performed based on the point cloud data captured by the radar, so that the depths of the three-dimensional scene output by the three-dimensional construction network are more accurate.

In a possible implementation, specifically, a virtual camera may be constructed based on the plurality of frames of images and the photographing parameter, to obtain virtual camera data, where the virtual camera data includes an image at a view different from the plurality of views; and iterative training is performed on the initial model to obtain the three-dimensional construction network by using the virtual camera data as an input of the three-dimensional construction network and using the radar point cloud data as deep supervision of the three-dimensional construction network. Therefore, in this implementation of this application, training data for training the three-dimensional construction network may be added by constructing the virtual camera. This improves output accuracy of the three-dimensional construction network.

In a possible implementation, a specific process of constructing the virtual camera may include: first obtaining a pose parameter of each frame of image, that is, a parameter indicating a pose of each frame of image in the three-dimensional scene; projecting each frame of image into same space based on the pose of each frame of image, to obtain image point cloud data; and then projecting the image point cloud data based on an enhanced view to obtain the virtual camera data, where the enhanced view includes a view different from the photographing views of the plurality of frames of images. In this implementation of this application, the plurality of frames of images may be first projected to the same space to obtain the image point cloud data in the same space, so that image data of more views can be captured from the image point cloud data, to obtain the virtual camera data. It may be understood that, after the plurality of frames of images are projected to the same space, an image at a view different from the photographing views may be captured from the space, to increase an input view for training the three-dimensional construction network, and improve output accuracy of the three-dimensional construction network obtained through training.

Optionally, when deep supervision is performed based on the radar point cloud data, the radar point cloud data and the image point cloud data may be fused to obtain depths of a plurality of pixels in the image point cloud data, and then the depths of the plurality of pixels are used as deep supervision during deep three-dimensional reconstruction of the three-dimensional construction network, to train the three-dimensional construction network. Generally, data captured based on a radar echo may include more accurate depths. Therefore, the more accurate depths may be used as deep supervision during training of the three-dimensional construction network, so that depths of the three-dimensional scene output by the three-dimensional construction network are closer to real depths, and output accuracy of the three-dimensional construction network is improved.

Optionally, the three-dimensional construction network may specifically include an encoding module, at least two geometric modules, and at least two color modules. The geometric module may be configured to reconstruct a geometric structure of the three-dimensional scene, and the color module may be configured to reconstruct a color in the three-dimensional scene. The at least two geometric modules may be classified into a low-precision module (or referred to as a first geometric module) and a high-precision module (or referred to as a second geometric module). Output precision of the high-precision module is higher than output precision of the low-precision module, and structural complexity of the high-precision geometric module is usually higher than structural complexity of the low-precision geometric module. Similarly, the at least two color modules may also be classified into a low-precision color module (or referred to as a first color module) and a high-precision color module (or referred to as a second color module). Output precision of the high-precision color module is higher than output precision of the low-precision color module, and structural complexity of the high-precision color module is usually higher than structural complexity of the low-precision color module.

The encoding module may be configured to encode input data. An output of the encoding module is separately connected to input ends of the low-precision geometric module, the high-precision geometric module, and the high-precision color module, and an output end of the low-precision geometric module is connected to an output module of the three-dimensional construction network. The output end of the low-precision geometric module is further connected to an input end of the low-precision color module, an output end of the high-precision geometric module and an output end of the high-precision color module are separately connected to the output module, and the input ends of the low-precision color module and the high-precision color module may further include depth information captured by the radar.

Therefore, in this implementation of this application, the high-precision geometric module and the high-precision color module may be added to a NeRF network to obtain the three-dimensional construction network, and color reconstruction and geometric structure reconstruction are decoupled, so that geometric reconstruction and color reconstruction can be performed in parallel. This improves three-dimensional reconstruction efficiency.

Specifically, any iterative process of performing the iterative training on the three-dimensional construction network may include: obtaining at least one first sampling point on a first ray in a first view in a three-dimensional model output by a three-dimensional construction network obtained through a previous iteration; obtaining at least one second sampling point on a second ray in a second view of the three-dimensional model, where the at least one second sampling point is a point obtained by projecting the at least one first sampling point on the second ray, and the first view and the second view are any different views in the three-dimensional model; obtaining a difference between the first sampling point and the second sampling point; and updating the three-dimensional construction network based on the difference, to obtain a three-dimensional construction network updated in a current iterative update. In this implementation of this application, points at which rays in different views may intersect may be captured as sampling points, to update the three-dimensional construction network based on a difference between the sampling points on the different rays. In this way, the points at which the rays in different views in the three-dimensional scene output by the three-dimensional construction network may intersect are closer to intersection. This improves realism of the three-dimensional scene output by the three-dimensional construction network.

Optionally, in a process of calculating the difference between the sampling points on different rays, a first depth estimate of the first sampling point and a second depth estimate of the second sampling point may be estimated. Therefore, the difference between the first sampling point and the second sampling point is obtained based on a difference between the first depth estimate and the second depth estimate. In this implementation of this application, the points that may intersect in different views in the three-dimensional scene output by the three-dimensional construction network may be intersected as much as possible, to improve realism of the three-dimensional scene.

The foregoing describes a procedure of the three-dimensional construction network training method provided in this application. The following describes the three-dimensional construction network training method provided in this application in more detail with reference to a specific application scenario.

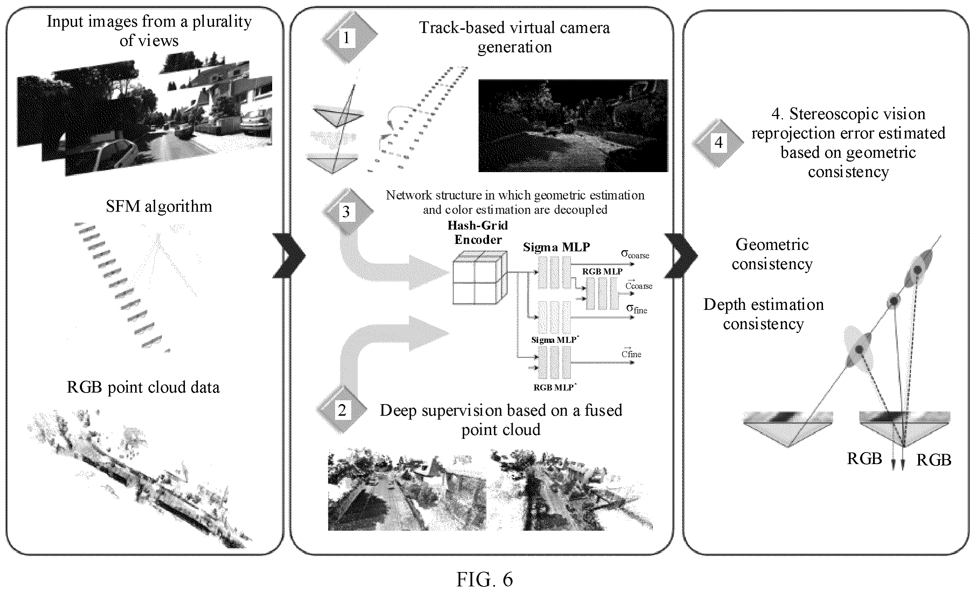

For example, the procedure of the three-dimensional construction network training method provided in this application may be shown in FIG. 6. An example in which the three-dimensional construction network is a network constructed based on the NeRF network (NeRF network for short below) is used for description. After the plurality of frames of images in the real scene are captured from the plurality of views, the pose of each frame of image is estimated by using a three-dimensional reconstruction algorithm. The plurality of frames of images may be projected to the same space, to obtain dense RGB point cloud data or the image point cloud data. Then, the virtual camera data is constructed based on the RGB point cloud data. Both the virtual camera data and the RGB point cloud data are used as training data, and the radar point cloud data is used as deep supervision, to train the three-dimensional construction network in which geometry and color are decoupled. Alternatively, a stereoscopic vision reprojection error may be estimated based on geometric consistency, and the three-dimensional construction network is updated based on the error, to obtain a re-updated three-dimensional construction network.

The three-dimensional construction network provided in this application may be applied to a plurality of scenarios, for example, an autonomous driving scenario, an AR/VR scenario, a high-precision mapping scenario, or a three-dimensional reconstruction scenario. The following describes, by using the autonomous driving scenario as an example, a detailed procedure of the three-dimensional construction network training method provided in this application.

1. Track-based virtual camera generation

After a plurality of frames of data are captured, accurate pose information of each image may be obtained by using the three-dimensional reconstruction algorithm, and then the dense RGB point cloud data is obtained through dense multi-view stereo matching. The three-dimensional reconstruction algorithm may specifically include but is not limited to a structure from motion (structure from motion, SFM) algorithm, a deep learning-based three-dimensional reconstruction algorithm, or the like. In this application, the SFM algorithm is used as an example for description. The SFM algorithm mentioned below may alternatively be replaced with another three-dimensional reconstruction algorithm. Details are not described below again.

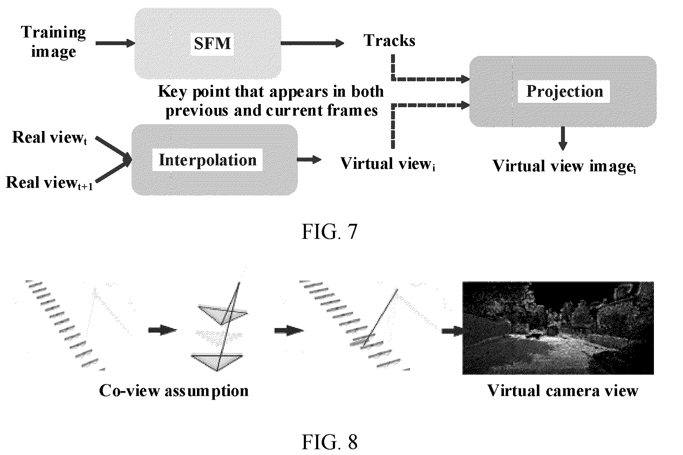

For example, a process of generating the virtual camera may be shown in FIG. 7.

The plurality of frames of images photographed by the camera device from the plurality of views are used as an input of the SFM algorithm. Track feature points and corresponding pose data are extracted from the plurality of frames of images by using the SFM algorithm, that is, feature points of a plurality of observation points in the same space are included. Specifically, a stable feature in the image may be extracted by using the SFM algorithm, to estimate a spatial point cloud. A real view t and a real view t+1 are selected from the plurality of views corresponding to the plurality of frames of images, and interpolation may be performed on the real view t and the real view t+1 to obtain one or more virtual views i (or referred to as enhanced views).

Then, secondary projection is performed on an image within a virtual view range based on a key feature point that appears in both previous and current frames of images at the virtual view i, that is, the key feature point is projected to the virtual view, to generate a virtual view image.

For example, a scene in which the virtual camera is generated may be shown in FIG. 8. Based on a co-view assumption, it may also be considered that a track feature point in space is continuously observed at an interpolated view between two frames of original views, and neighborhood information of the feature point is also stable. Therefore, interpolation may be selected from the two views to obtain a new view, and projection is performed based on the neighborhood information to obtain a virtual camera view image.

This is equivalent to that in this implementation of this application, an original training image data sequence is input, and track feature points in a scene may be obtained by using the SFM algorithm, that is, tracks connected by matching points corresponding to one three-dimensional point at different views, and pose data corresponding to the track feature points. Pose data of a virtual view may be obtained based on the co-view assumption and through pose interpolation. Then, camera data of the virtual view is obtained through back projection of the track feature points.

Generally, a data view in an outdoor large scenario and a data view in the autonomous driving scenario are usually limited. As a result, a training data view is sparse, and finally, accurate restoration of a geometric structure in the scene is affected. Virtual camera generation based on the track feature points can increase a view input of training data, enhance importance of the track feature points in the NeRF network, and improve restoration of scene geometric information. The track feature points obtained by using the SFM algorithm have strong features, and have strong geometric consistency in space. Generation of a virtual camera view can enhance memorization and learning of these strong feature points by the NeRF network, and improve restoration precision of the scene geometric information. In addition, a color of an object is usually related to an observation angle of the camera. Training data of the NeRF network can be increased by increasing the observation angle, to improve output precision of the NeRF network.

It may be understood that, in this application, the track-based virtual camera generation manner is proposed, and a display model of a scene is generated by using the SFM, to improve a function of a strong feature point in an implicit expression of the scene, and increase an input view for training the NeRF network. This can weaken a problem of a limited data capture view in the autonomous driving scenario.

2. Deep supervision

An image sequence is input, and dense RGB colored point clouds and accurate pose data corresponding to the camera may be obtained by using the SFM algorithm. However, a scale obtained from an image may not be the same as a scale in a scene. Therefore, to make a scale learned by the NeRF network more accurate, a point cloud registration algorithm including the scale may be used to align the radar point cloud data with the RGB point cloud data, to obtain fused point cloud data as deep supervision for training the NeRF network.

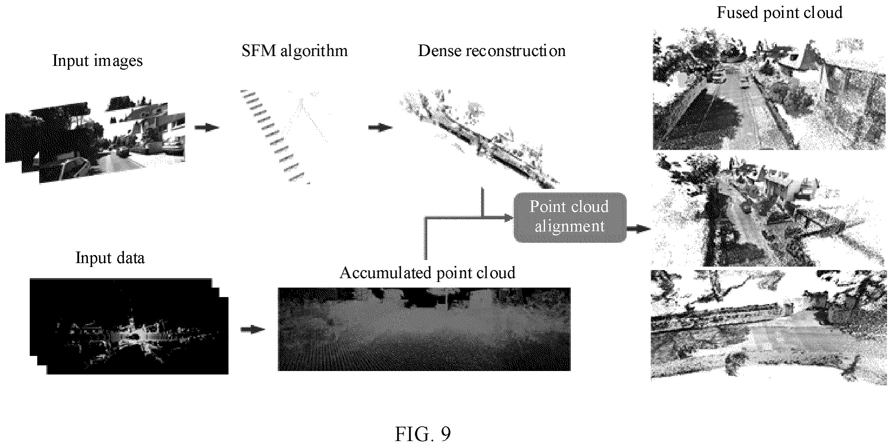

For example, as shown in FIG. 9, in addition to obtaining the RGB point cloud data by using the SFM algorithm, a plurality of frames of input data may be further captured by using the radar, and the plurality of frames of data are accumulated to obtain the radar point cloud data. The radar point cloud data is aligned with the RGB point cloud data. Specifically, registration may be performed by using an algorithm like a scaling iterative closest point (scaling iterative closest point, SICP) or a scaling generalized iterative closest point (scaling generalized iterative closest point, SGICP), to obtain the fused point cloud data.

Generally, the radar point cloud data captured by the radar can more accurately reflect a depth of each point in a scene. Aligning a depth included in the radar point cloud data with each pixel in the RGB point cloud data is equivalent to allocating a real depth to each pixel in the RGB point cloud data, as deep supervision for training the NeRF network. In this way, an estimated depth of the three-dimensional model output by the NeRF network is closer to the real depth and is more accurate.

3. Structure and training of the three-dimensional construction network

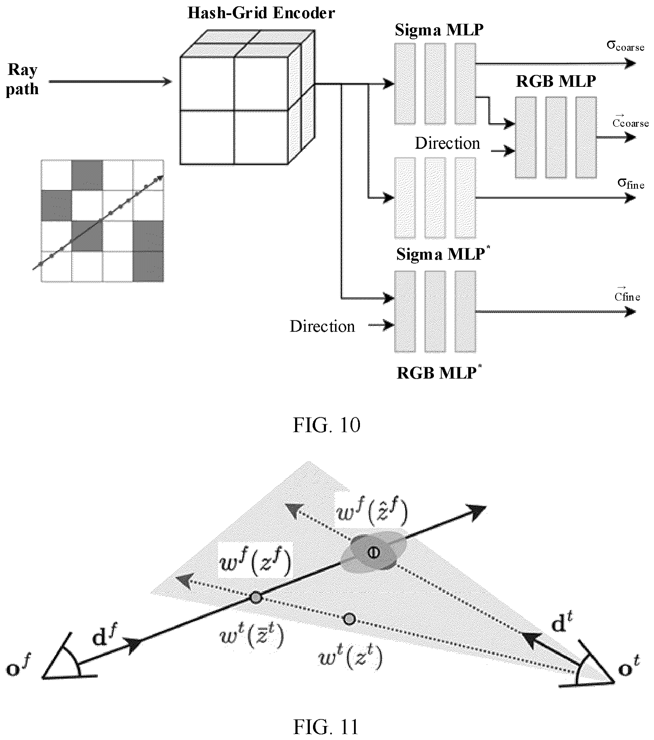

The three-dimensional construction network may be a network constructed based on the NeRF network. For example, the three-dimensional construction network includes four construction modules. The structure of the three-dimensional construction network provided in this application may be specifically shown in FIG. 10.

The three-dimensional construction module may include at least one encoding module and a plurality of construction modules.

The encoding module may be configured to convert input data into a vector that can be subsequently identified by the network. The encoding module may specifically be a model like a Hash-grid encoding module (Hash-Grid Encoder), a time-domain filter, or a spatial filter. In this application, an example in which the encoding module is the Hash-grid encoding module is used for description. The Hash-grid encoding module mentioned below may alternatively be replaced with another encoding model. Details are not described below again.

The construction module may be a multilayer perceptron (Multilayer Perceptron, MLP), or certainly may be replaced with another neural network. This is not limited herein. Parameters such as structures or weights of different construction modules may be different.

For example, the three-dimensional construction module may specifically include modules such as the Hash-grid encoding module, a Sigma MLP, an RGB MLP, a Sigma MLP*, and an RGB MLP*.

The Sigma MLP and the Sigma MLP* may be used to perform geometric reconstruction on the three-dimensional scene, and output precision of the Sigma MLP* is higher than output precision of the Sigma MLP. Network structural complexity of the Sigma MLP* is usually higher than network structural complexity of the Sigma MLP. For example, a quantity of network layers of the Sigma MLP* is greater than a quantity of network layers of the Sigma MLP, or a quantity of neurons of the Sigma MLP* is greater than a quantity of neurons of the Sigma MLP.

The RGB MLP and the RGB MLP* may be used to perform color reconstruction on the three-dimensional scene, and output precision of the RGB MLP* is higher than output precision of the RGB MLP. Structural complexity of the RGB MLP* is usually higher than structural complexity of the RGB MLP. For example, a quantity of network layers of the RGB MLP* is greater than a quantity of network layers of the RGB MLP, or a weight parameter of the RGB MLP* is greater than a weight parameter of the RGB MLP. In this way, a more complex network structure is used to implement higher-precision output.

Inputs of the Sigma MLP, the Sigma MLP*, and the RGB MLP* each include an output of the Hash-grid encoding module, and an input of the RGB MLP may include an output of the Sigma MLP. In a training process, the input of the RGB MLP may further include deep supervision, that is, the foregoing fused point cloud data; and the input of the RGB MLP* may further include the fused point cloud data. Generally, the radar point cloud data captured by the radar may more accurately represent depths in the real scene. Therefore, the radar point cloud data may be used as deep supervision or depth guidance, so that the depths of the three-dimensional scene output by the NeRF network are closer to depths in an actual scene.

After the RGB point cloud data and the fused point cloud data are obtained, a specific training process may include: After the network is pre-trained (a first round of training) based on the fused point cloud data, an initial weight of the NeRF network may be obtained. Then, secondary optimization (a second round of training) may be performed on an initialized scene model by using an RGB image sequence in a training set, to obtain a trained NeRF network. The trained NeRF network may output voxels of the three-dimensional scene.

Therefore, in this implementation of this application, the depths in the three-dimensional scene may be supervised by using the real depths included in the fused point cloud data, so that the depths of the three-dimensional scene output by the NeRF network are closer to the depths in the actual scene. In this way, depth output accuracy of the network is improved. In addition, for a high-precision module, a geometric (sigma) estimation network and a color (color) estimation network are decoupled, to improve a parallelism degree and a color fitting capability of a network model, improve rendering quality of the RGB image, and accelerate training and inference efficiency of the NeRF network.

4. Stereoscopic vision reprojection error

Generally, to improve the NeRF network, an output result of the NeRF network may be further corrected based on observation values of a same sampling point from different views, to improve output accuracy of the NeRF network. For example, for a neural radiation field constructed from a plurality of views, different adjacent views are usually observable to a same object. Therefore, adding a geometric consistency constraint to observation of a same object can make an output of the network more accurate, and can improve a volume density estimation capability of the NeRF network.

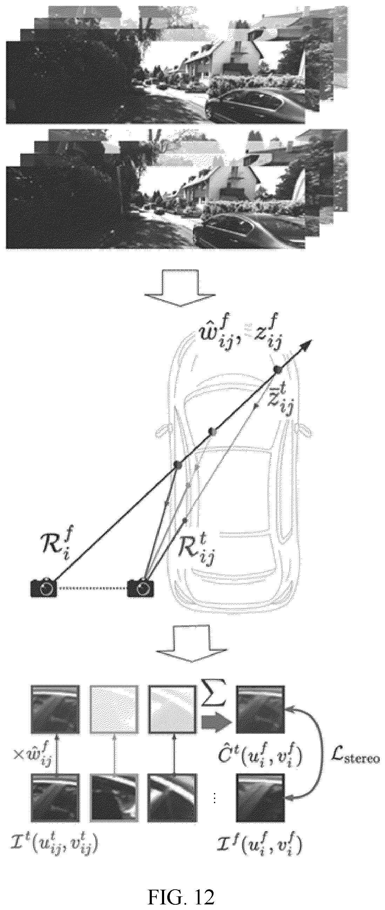

For example, a manner of calculating the reprojection error may be shown in FIG. 11 and FIG. 12. For each pixel in a view $f$, a ray $R^f(o^f, d^f)$ emitted by using the pixel is sampled along the ray, to obtain a series of sample points $z^f$, and the NeRF network may be used to estimate weights $\omega^f(z^f)$ of the sample points. Further, depth and color information of the corresponding pixel are synthesized. For another view $t$, a series of rays may be emitted and hit on the sample points of the ray from the view $f$, to evaluate consistency of the rays from the two views in a same scene. Consistency of the view $t$ may be described by using the following formula:

$$R_{g^t(\bar{z}^t)} = \int_{\bar{z}^t - \epsilon}^{\bar{z}^t + \epsilon} \left(\omega^t(z) - K_\epsilon(z - \bar{z}^t)\right)^2 dz$$

Herein, $\bar{z}^t$ is a depth of projection of the sampling point in the view $f$ on the view $t$, $K_\epsilon$ is Gaussian distribution, and $\epsilon$ is half of a length of a neighborhood interval. Consistency of a multi-view neural radiation field may be described as follows:

$$g(\hat{z}^f) = \int_{\hat{z}^f - \epsilon}^{\hat{z}^f + \epsilon} \left[ R_{g^t(\bar{z}^t)} \left( \omega^f(z) - K_\epsilon(z - \hat{z}^f) \right)^2 \right] dz$$

In the formula, $\hat{z}^f$ is a depth estimate of any pixel ray from the view $f$.

Based on a designed consistent neural radiation field, a multi-view stereoscopic vision reprojection error (stereo loss) is used to optimize consistency of a model, and integrates a geometric error and a photometric (color) error of a scene. In an actual optimization process, an image patch is used as a basic unit for training, to avoid ambiguity of a single pixel in a weak texture region or a repeated texture region. The stereo loss is designed as follows:

$$L_{stereo} = \sum g(\hat{z}^f) \cdot \left\| I^f(u^f, v^f) - \hat{C}^t(u^f, v^f) \right\|$$

In the formula, $I^f$ is a pixel corresponding to an original training image patch from the view $f$, and $\hat{C}^t$ is a pixel corresponding to an image patch obtained by accumulating the weights estimated based on the sampling points in the view $t$. The stereo loss can better constrain consistency between different views in a scene, and improve geometric quality estimation of the scene without affecting RGB image rendering.

2. Inference phase

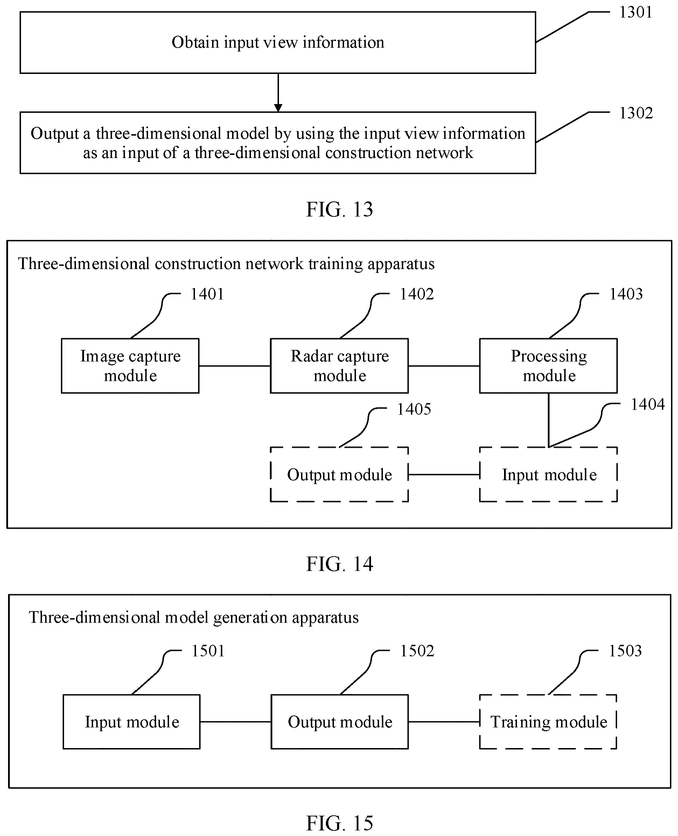

FIG. 13 is a schematic flowchart of a three-dimensional model generation method according to this application. Details are as follows:

1301: Obtain input view information.

The input pose information may specifically include information such as a camera pose or a camera parameter of an input view.

For example, in an autonomous driving scenario, when an image of a driving direction of a vehicle needs to be captured, a view of the current driving direction of the vehicle may be input, to obtain a three-dimensional scene in front of the vehicle.

1302: Output a three-dimensional model by using the input view information as an input of a three-dimensional construction network.

A trained three-dimensional construction network may be obtained according to the three-dimensional construction network training method provided in this application, and the three-dimensional model is output by using the trained three-dimensional construction network and by using the input view information as the input of the three-dimensional construction network. The three-dimensional model may be used to represent a three-dimensional image at the input view.

It should be noted that, for a training process of the three-dimensional construction network, refer to the related descriptions in FIG. 5 to FIG. 12. Details are not described herein again.

Therefore, in this implementation of this application, the three-dimensional construction network may be trained based on images of a plurality of views captured in a real scene and a photographing parameter, and deep supervision is performed based on point cloud data captured by a radar, so that depths of a three-dimensional scene output by the three-dimensional construction network are more accurate. In this way, a more accurate three-dimensional model is output by the trained three-dimensional construction network. For example, in the autonomous driving field, as a new-generation image data synthesizer applied to an autonomous driving simulation platform, the three-dimensional model generation method has lower costs, higher image fidelity, and better scenario diversity than a CG image synthesis method. For another example, in the novel view image synthesis field, when a key image rendering quality indicator, for example, a peak signal-to-noise ratio (peak signal-to-noise-ratio, PSNR) reaches the SOTA (State of the art), better three-dimensional modeling effect is achieved.

The foregoing describes the procedures of the methods provided in this application. The following describes, with reference to the procedures of the methods, apparatuses for performing the methods provided in this application.

FIG. 14 is a diagram of a structure of a three-dimensional construction network training apparatus according to this application. The three-dimensional construction network training apparatus includes:

an image capture module 1401, configured to obtain a plurality of frames of images and a photographing parameter used by a camera device when the plurality of frames of images are photographed, where the plurality of frames of images include images photographed from a plurality of views;

a radar capture module 1402, configured to obtain radar point cloud data, where a capture scenario in which a radar captures the radar point cloud data has an intersection with a photographing scenario in which the camera device photographs the plurality of frames of images; and

a processing module 1403, configured to obtain a three-dimensional construction network based on the plurality of frames of images, the photographing parameter, and the radar point cloud data, where the three-dimensional construction network is used to perform three-dimensional construction based on input data to output a three-dimensional model, and the radar point cloud data is used as deep supervision during three-dimensional construction of the three-dimensional construction network.

In a possible implementation, the processing module 1403 is specifically configured to: construct a virtual camera based on the plurality of frames of images and the photographing parameter, to obtain virtual camera data, where the virtual camera data includes an image at a view different from the plurality of views; and perform iterative training on an initial model to obtain the three-dimensional construction network by using the virtual camera data as an input of the three-dimensional construction network and using the radar point cloud data as deep supervision of the three-dimensional construction network.

In a possible implementation, the processing module 1403 is specifically configured to: obtain a pose parameter of each frame of image in the plurality of frames of images; project the plurality of frames of images into same space based on a pose of each frame of image, to obtain image point cloud data; and project the image point cloud data based on an enhanced view to obtain the virtual camera data, where the enhanced view is a view different from the plurality of views.

In a possible implementation, the processing module is specifically configured to: fuse the radar point cloud data and the image point cloud data to obtain depths of a plurality of pixels; and use the depths of the plurality of pixels as deep supervision during three-dimensional construction of the three-dimensional construction network.

In a possible implementation, any one time of iterative training in the iterative training may include: obtaining at least one first sampling point on a first ray in a first view in a three-dimensional model output by a three-dimensional construction network obtained through a previous iteration; obtaining at least one second sampling point on a second ray in a second view of the three-dimensional model, where the at least one second sampling point is a point obtained by projecting the at least one first sampling point on the second ray, and the first view and the second view are any different views in the three-dimensional model; obtaining a difference between the first sampling point and the second sampling point; and updating the three-dimensional construction network based on the difference, to obtain a three-dimensional construction network updated in a current iterative update.

In a possible implementation, the processing module 1403 is specifically configured to: obtain a first depth estimate of the first sampling point and a second depth estimate of the second sampling point; and obtain a difference between the first depth estimate and the second depth.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;

the first geometric module and the second geometric module are configured to perform geometric construction based on the input data, to output a geometric structure of a three-dimensional scene, where output precision of the second geometric module is higher than output precision of the first geometric module; and

the first color module and the second color module are configured to perform color construction based on the input data, to output a color value of each pixel in the three-dimensional scene, where output precision of the second color module is higher than output precision of the first color module, and an input of the first color module includes an input of the first geometric module.

In a possible implementation, the input of the first color module and an input of the second color module each further include deep supervision obtained based on the radar point cloud data.

In a possible implementation, the apparatus further includes:

an input module 1404, configured to obtain an input pose and a camera parameter; and

an output module 1405, configured to obtain an output image from the three-dimensional scene based on the input pose and the camera parameter.

In a possible implementation, the three-dimensional model output by the three-dimensional construction network may be applied to autonomous driving of a vehicle.

FIG. 15 is a diagram of a structure of a three-dimensional model generation apparatus according to this application. The three-dimensional model generation apparatus may include:

an input module 1501, configured to obtain input view information; and

an output module 1502, configured to output a three-dimensional model by using the input view information as an input of a three-dimensional construction network, where the three-dimensional construction network is obtained based on a plurality of frames of images, a photographing parameter, radar point cloud data, and the three-dimensional construction network, the photographing parameter is a parameter used by a camera device when the plurality of frames of images are photographed, the plurality of frames of images include images photographed from a plurality of views, the radar point cloud data is data captured by a radar, and a capture scenario in which the radar captures the radar point cloud data has an intersection with a photographing scenario in which the camera device photographs the plurality of frames of images.

In a possible implementation, the three-dimensional construction network includes an encoding module, a first geometric module, a first color module, a second geometric module, and a second color module, where

the encoding module is configured to: encode a value of an input pixel, and then separately input the encoded value to the first geometric module, the second geometric module, and the second color module;
the first geometric module and the second geometric module are configured to perform geometric construction based on input data, to output a geometric structure of the three-dimensional model, where output precision of the second geometric module is higher than output precision of the first geometric module; and
the first color module and the second color module are configured to perform color construction based on input data, to output a color value of each pixel in the three-dimensional model, where output precision of the second color module is higher than output precision of the first color module, and an input of the first color module includes an input of the first geometric module.

In a possible implementation, the apparatus may further include a training module 1503. The training module is configured to perform training to obtain the three-dimensional construction network. The training module may be configured to perform a procedure of the three-dimensional construction network training method provided in this application. For details, refer to the descriptions of the foregoing training phase. Details are not described herein again.

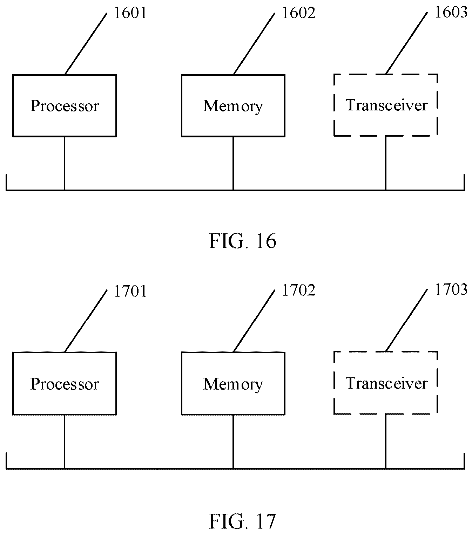

FIG. 16 is a diagram of a structure of another three-dimensional construction network training apparatus according to this application. Details are as follows:
The three-dimensional construction network training apparatus may include a processor 1601 and a memory 1602. The processor 1601 and the memory 1602 are interconnected through a line. The memory 1602 stores program instructions and data.
The memory 1602 stores the program instructions and the data that correspond to the steps in FIG. 5 to FIG. 12. More specifically, the processor may alternatively be a processor for processing an image, for example, a GPU or a CPU for processing an image.
The processor 1601 is configured to perform the method steps performed by the three-dimensional construction network training apparatus shown in any one of the embodiments in FIG. 5 to FIG. 12.
Optionally, the three-dimensional construction network training apparatus may further include a transceiver 1603, configured to receive or send data.
Optionally, the three-dimensional construction network training apparatus shown in FIG. 16 is a chip.
FIG. 17 is a diagram of a structure of another three-dimensional model generation apparatus according to this application. Details are as follows:
The three-dimensional model generation apparatus may include a processor 1701 and a memory 1702. The processor 1701 and the memory 1702 are interconnected through a line. The memory 1702 stores program instructions and data.
The memory 1702 stores the program instructions and the data that correspond to the steps in FIG. 13. More specifically, the processor may alternatively be a processor for processing an image, for example, a GPU or a CPU for processing an image.
The processor 1701 is configured to perform the method steps performed by the three-dimensional model generation apparatus shown in any one of the embodiments in FIG. 13.
Optionally, the three-dimensional model generation apparatus may further include a transceiver 1703, configured to receive or send data.
Optionally, the three-dimensional model generation apparatus shown in FIG. 17 is a chip.
An embodiment of this application further provides a computer-readable storage medium. The computer-readable storage medium stores a program. When the program runs on a computer, the computer is enabled to perform the steps in the methods described in the embodiments shown in FIG. 5 to FIG. 13.
An embodiment of this application further provides a digital processing chip. A circuit and one or more interfaces that are configured to implement functions of the processor 1601/1701 or the processor 1601/1701 are integrated into the digital processing chip. When a memory is integrated into the digital processing chip, the digital processing chip may complete the method steps in any one or more embodiments in the foregoing embodiments. When a memory is not integrated into the digital processing chip, the digital processing chip may be connected to an external memory through a communication interface. The digital processing chip implements, based on program code stored in the external memory, the actions in the foregoing embodiments.

An embodiment of this application further provides a computer program product including instructions. When the computer program product runs on a computer, the computer is enabled to perform steps in the methods described in the embodiments shown in FIG. 5 to FIG. 13.

The three-dimensional construction network training apparatus or the three-dimensional model generation apparatus provided in embodiments of this application may be a chip. The chip may include a processing unit and a communication unit. The processing unit may be, for example, a processor, and the communication unit may be, for example, an input/output interface, a pin, a circuit, or the like. The processing unit may execute computer-executable instructions stored in a storage unit, so that the chip in a server performs the methods described in the embodiments shown in FIG. 5 to FIG. 13. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. A general-purpose processor may be a microprocessor or any conventional processor or the like.

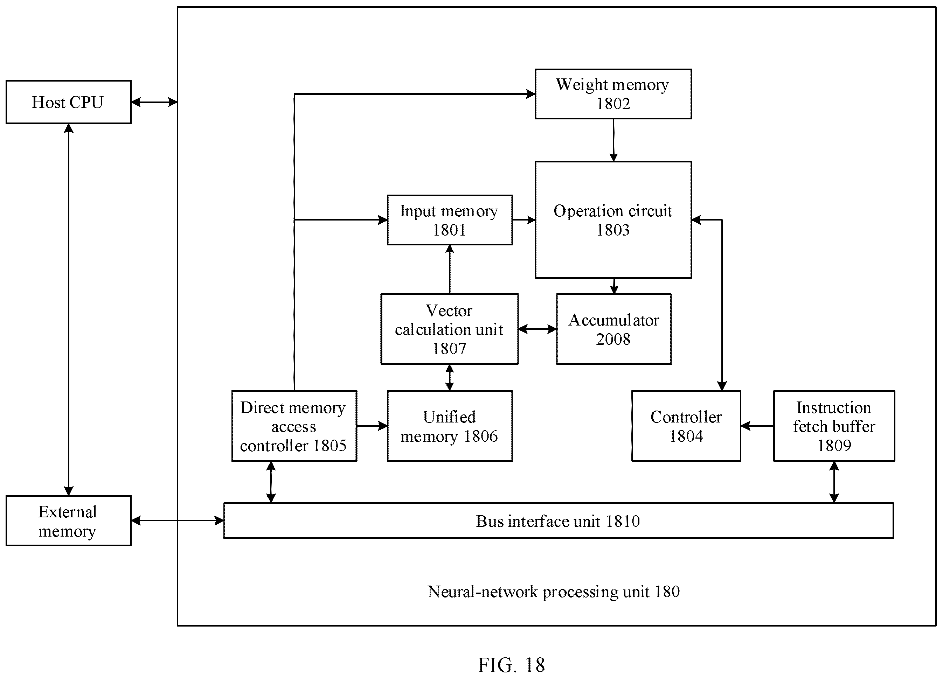

For example, refer to FIG. 18. FIG. 18 is a diagram of a structure of a chip according to an embodiment of this application. The chip may be represented as a neural-network processing unit NPU 180. The NPU 180 is mounted to a host CPU (Host CPU) as a coprocessor, and the host CPU allocates a task. A core part of the NPU is an operation circuit 1803. A controller 1804 controls the operation circuit 1803 to extract matrix data in a memory and performs a multiplication operation.

In some implementations, the operation circuit 1803 includes a plurality of processing engines (processing engine, PE). In some implementations, the operation circuit 1803 is a two-dimensional systolic array. The operation circuit 1803 may alternatively be a one-dimensional systolic array or another electronic circuit that can perform mathematical operations such as multiplication and addition. In some implementations, the operation circuit 1803 is a general-purpose matrix processor.

For example, it is assumed that there is an input matrix A, a weight matrix B, and an output matrix C. The operation circuit fetches, from a weight memory 1802, data corresponding to the matrix B, and caches the data on each PE in the operation circuit. The operation circuit fetches data of the matrix A from an input memory 1801, to perform a matrix operation on the matrix B, and stores an obtained partial result or an obtained final result of the matrix in an accumulator (accumulator) 1808.

A unified memory 1806 is configured to store input data and output data. Weight data is directly transferred to the weight memory 1802 by using a direct memory access controller (direct memory access controller, DMAC) 1805. The input data is also transferred to the unified memory 1806 by using the DMAC.

A bus interface unit (bus interface unit, BIU) 1810 is used for interaction between an AXI bus and the DMAC and an instruction fetch buffer (Instruction Fetch Buffer, IFB) 1809.

The bus interface unit (Bus Interface Unit, BIU) 1810 is used by the instruction fetch buffer 1809 to obtain instructions from an external memory, and is further used by the direct memory access controller 1805 to obtain raw data of the input matrix A or the weight matrix B from the external memory.

The DMAC is mainly configured to transfer the input data in the external memory DDR to the unified memory 1806, transfer the weight data to the weight memory 1802, or transfer the input data to the input memory 1801.

A vector calculation unit 1807 includes a plurality of operation processing units, and performs further processing, for example, vector multiplication, vector addition, an exponential operation, a logarithmic operation, or value comparison, on an output of the operation circuit if necessary. The vector calculation unit 1807 is mainly configured to perform network calculation at a non-convolutional/fully connected layer in a neural network, for example, batch normalization (batch normalization), pixel-level summation, and upsampling on a feature plane.

In some implementations, the vector calculation unit 1807 can store a processed output vector in the unified memory 1806. For example, the vector calculation unit 1807 may apply a linear function and/or a non-linear function to the output of the operation circuit 1803. For example, linear interpolation is performed on a feature plane extracted at a convolutional layer. For another example, vectors whose values are accumulated are used to generate an activation value. In some implementations, the vector calculation unit 1807 generates a normalized value, a pixel-level summation value, or both a normalized value and a pixel-level summation value. In some implementations, the processed output vector can be used as an activation input to the operation circuit 1803, for example, used at a subsequent layer in the neural network.

The instruction fetch buffer (instruction fetch buffer) 1809 connected to the controller 1804 is configured to store instructions used by the controller 1804.

The unified memory 1806, the input memory 1801, the weight memory 1802, and the instruction fetch buffer 1809 are all on-chip memories. The external memory is private to a hardware architecture of the NPU.

An operation at each layer in a recurrent neural network may be performed by the operation circuit 1803 or the vector calculation unit 1807.

The processor mentioned above may be a general-purpose central processing unit, a microprocessor, an ASIC, or one or more integrated circuits configured to control program execution of the methods in FIG. 5 to FIG. 13.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided in this application, connection relationships between modules indicate that the modules have communication connections with each other, which may be specifically implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be completed by a computer program can be easily implemented by using corresponding hardware. Moreover, a specific hardware structure used to achieve a same function may alternatively be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When the embodiments are implemented by using software, all or a part of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In the specification, claims, and accompanying drawings of this application, the terms "first", "second", "third", "fourth", and so on (if existent) are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application, but are not intended to limit the protection scope of this application. Any variation or replacement readily figured out by a person skilled in the art within the technical scope disclosed in this application shall fall within the protection scope of this application.

**Claims**

1. A three-dimensional construction network training method, comprising:

    obtaining a plurality of frames of images and a photographing parameter used by a camera device when the plurality of frames of images are photographed, wherein the plurality of frames of images comprise images photographed from a plurality of views;
    obtaining radar point cloud data, wherein a capture scenario in which a radar captures the radar point cloud data has an intersection with a photographing scenario in which the camera device photographs the plurality of frames of images; and
    obtaining a three-dimensional construction network based on the plurality of frames of images, the photographing parameter, and the radar point cloud data, wherein the three-dimensional construction network is used to perform three-dimensional construction based on input data to output a three-dimensional model, and the radar point cloud data is used as deep supervision during three-dimensional construction of the three-dimensional construction network.

2. The method according to claim 1, wherein the obtaining the three-dimensional construction network based on the plurality of frames of images, the photographing parameter, and the radar point cloud data comprises:

    constructing a virtual camera based on the plurality of frames of images and the photographing parameter, to obtain virtual camera data, wherein the virtual camera data comprises an image at a view different from the plurality of views; and
    performing iterative training on an initial model to obtain the three-dimensional construction network by using the virtual camera data as an input of the three-dimensional construction network and using the radar point cloud data as deep supervision of the three-dimensional construction network.

3. The method according to claim 2, wherein the constructing the virtual camera based on the plurality of frames of images and the photographing parameter, to obtain the virtual camera data comprises:

    obtaining a pose parameter of each frame of image in the plurality of frames of images;
    projecting the plurality of frames of images into same space based on a pose of each frame of image, to obtain image point cloud data; and
    projecting the image point cloud data based on an enhanced view to obtain the virtual camera data, wherein the enhanced view is a view different from the plurality of views.

4. The method according to claim 3, wherein the using the radar point cloud data as deep supervision of the three-dimensional construction network comprises:

    fusing the radar point cloud data and the image point cloud data to obtain depths of a plurality of pixels; and
    using the depths of the plurality of pixels as deep supervision during three-dimensional construction of the three-dimensional construction network.

5. The method according to any one of claims 2 to 4, wherein any one time of iterative training in the iterative training comprises:

    obtaining at least one first sampling point on a first ray in a first view in a three-dimensional model output by a three-dimensional construction network obtained through a previous iteration;
    obtaining at least one second sampling point on a second ray in a second view of the three-dimensional model, wherein the at least one second sampling point is a point obtained by projecting the at least one first sampling point on the second ray, and the first view and the second view are any different views in the three-dimensional model;
    obtaining a difference between the first sampling point and the second sampling point; and
    updating the three-dimensional construction network based on the difference, to obtain a three-dimensional construction network updated in a current iterative update.

6. The method according to claim 5, wherein the obtaining the difference between the first sampling point and the second sampling point comprises:

    obtaining a first depth estimate of the first sampling point and a second depth estimate of the second sampling point; and
obtaining a difference between the first depth estimate and the second depth.

**7.** The method according to any one of claims 1 to 6, wherein the three-dimensional construction network comprises an encoding module, a first geometric module, a first color module, a second geometric module, and a second color module, wherein

the encoding module is configured to: encode a value of an input pixel, and then separately input the encoded value to the first geometric module, the second geometric module, and the second color module;
the first geometric module and the second geometric module are configured to perform geometric construction based on the input data, to output a geometric structure of a three-dimensional scene, wherein output precision of the second geometric module is higher than output precision of the first geometric module; and
the first color module and the second color module are configured to perform color construction based on the input data, to output a color value of each pixel in the three-dimensional scene, wherein output precision of the second color module is higher than output precision of the first color module, and an input of the first color module comprises an input of the first geometric module.

**8.** The method according to claim 7, wherein the input of the first color module and an input of the second color module each further comprise a depth, and the depth comprises a value obtained based on the radar point cloud data.

**9.** The method according to any one of claims 1 to 8, wherein the method further comprises:

obtaining an input pose and a camera parameter; and
obtaining an output image from the three-dimensional scene based on the input pose and the camera parameter.

**10.** The method according to any one of claims 1 to 9, wherein the three-dimensional model output by the three-dimensional construction network is applied to autonomous driving of a vehicle.

**11.** A three-dimensional model generation method, comprising:

obtaining input view information; and
outputting a three-dimensional model by using the input view information as an input of a three-dimensional construction network, wherein the three-dimensional construction network is obtained based on a plurality of frames of images, a photographing parameter, the radar point cloud data, and the three-dimensional construction network, the photographing parameter is a parameter used by a camera device when the plurality of frames of images are photographed, the plurality of frames of images comprise images photographed from a plurality of views, the radar point cloud data is data captured by a radar, and a capture scenario in which the radar captures the radar point cloud data has an intersection with a photographing scenario in which the camera device photographs the plurality of frames of images.

**12.** The method according to claim 11, wherein the three-dimensional construction network comprises an encoding module, a first geometric module, a first color module, a second geometric module, and a second color module, wherein

the encoding module is configured to: encode a value of an input pixel, and then separately input the encoded value to the first geometric module, the second geometric module, and the second color module;
the first geometric module and the second geometric module are configured to perform geometric construction based on input data, to output a geometric structure of the three-dimensional model, wherein output precision of the second geometric module is higher than output precision of the first geometric module; and
the first color module and the second color module are configured to perform color construction based on input data, to output a color value of each pixel in the three-dimensional model, wherein output precision of the second color module is higher than output precision of the first color module, and an input of the first color module comprises an input of the first geometric module.

**13.** A three-dimensional construction network training apparatus, comprising:

an image capture module, configured to obtain a plurality of frames of images and a photographing parameter used by a camera device when the plurality of frames of images are photographed, wherein the plurality of frames of images comprise images photographed from a plurality of views;

a radar capture module, configured to obtain radar point cloud data, wherein a capture scenario in which a radar captures the radar point cloud data has an intersection with a photographing scenario in which the camera device photographs the plurality of frames of images; and

a processing module, configured to obtain a three-dimensional construction network based on the plurality of frames of images, the photographing parameter, and the radar point cloud data, wherein the three-dimensional construction network is used to perform three-dimensional construction based on input data to output a three-dimensional model, and the radar point cloud data is used as deep supervision during three-dimensional construction of the three-dimensional construction network.

14. The apparatus according to claim 13, wherein the processing module is specifically configured to:

construct a virtual camera based on the plurality of frames of images and the photographing parameter, to obtain virtual camera data, wherein the virtual camera data comprises an image at a view different from the plurality of views; and

perform iterative training on an initial model to obtain the three-dimensional construction network by using the virtual camera data as an input of the three-dimensional construction network and using the radar point cloud data as deep supervision of the three-dimensional construction network.

15. The apparatus according to claim 14, wherein the processing module is specifically configured to:

obtain a pose parameter of each frame of image in the plurality of frames of images;

project the plurality of frames of images into same space based on a pose of each frame of image, to obtain image point cloud data; and

project the image point cloud data based on an enhanced view to obtain the virtual camera data, wherein the enhanced view is a view different from the plurality of views.

16. The apparatus according to claim 15, wherein the processing module is specifically configured to:

fuse the radar point cloud data and the image point cloud data to obtain depths of a plurality of pixels; and

use the depths of the plurality of pixels as deep supervision during three-dimensional construction of the three-dimensional construction network.

17. The apparatus according to any one of claims 14 to 16, wherein any one time of iterative training in the iterative training comprises:

obtaining at least one first sampling point on a first ray in a first view in a three-dimensional model output by a three-dimensional construction network obtained through a previous iteration;

obtaining at least one second sampling point on a second ray in a second view of the three-dimensional model, wherein the at least one second sampling point is a point obtained by projecting the at least one first sampling point on the second ray, and the first view and the second view are any different views in the three-dimensional model;

obtaining a difference between the first sampling point and the second sampling point; and

updating the three-dimensional construction network based on the difference, to obtain a three-dimensional construction network updated in a current iterative update.

18. The apparatus according to claim 17, wherein the processing module is specifically configured to:

obtain a first depth estimate of the first sampling point and a second depth estimate of the second sampling point; and

obtain a difference between the first depth estimate and the second depth.

19. The apparatus according to any one of claims 13 to 18, wherein the three-dimensional construction network comprises an encoding module, a first geometric module, a first color module, a second geometric module, and a second color module, wherein

the encoding module is configured to: encode a value of an input pixel, and then separately input the encoded value to the first geometric module, the second geometric module, and the second color module;

the first geometric module and the second geometric module are configured to perform geometric construction based on the input data, to output a geometric structure of a three-dimensional scene, wherein output precision of the second geometric module is higher than output precision of the first geometric module; and

the first color module and the second color module are configured to perform color construction based on the input data, to output a color value of each pixel in the three-dimensional scene, wherein output precision of the second color module is higher than output precision of the first color module, and an input of the first color module comprises an input of the first geometric module.

20. The apparatus according to claim 19, wherein the input of the first color module and an input of the second color module each further comprise a depth, and the depth comprises a value obtained based on the radar point cloud data.

21. The apparatus according to any one of claims 13 to 20, wherein the apparatus further comprises:

an input module, configured to obtain an input pose and a camera parameter; and
an output module, configured to obtain an output image from the three-dimensional scene based on the input pose and the camera parameter.

22. The apparatus according to any one of claims 13 to 21, wherein the three-dimensional model output by the three-dimensional construction network is applied to autonomous driving of a vehicle.

23. A three-dimensional model generation apparatus, comprising:

an input module, configured to obtain input view information; and
an output module, configured to output a three-dimensional model by using the input view information as an input of a three-dimensional construction network, wherein the three-dimensional construction network is obtained based on a plurality of frames of images, a photographing parameter, the radar point cloud data, and the three-dimensional construction network, the photographing parameter is a parameter used by a camera device when the plurality of frames of images are photographed, the plurality of frames of images comprise images photographed from a plurality of views, the radar point cloud data is data captured by a radar, and a capture scenario in which the radar captures the radar point cloud data has an intersection with a photographing scenario in which the camera device photographs the plurality of frames of images.

24. The apparatus according to claim 23, wherein the three-dimensional construction network comprises an encoding module, a first geometric module, a first color module, a second geometric module, and a second color module, wherein

the encoding module is configured to: encode a value of an input pixel, and then separately input the encoded value to the first geometric module, the second geometric module, and the second color module;
the first geometric module and the second geometric module are configured to perform geometric construction based on input data, to output a geometric structure of the three-dimensional model, wherein output precision of the second geometric module is higher than output precision of the first geometric module; and
the first color module and the second color module are configured to perform color construction based on input data, to output a color value of each pixel in the three-dimensional model, wherein output precision of the second color module is higher than output precision of the first color module, and an input of the first color module comprises an input of the first geometric module.

25. A three-dimensional construction network training apparatus, comprising a processor, wherein the processor is coupled to a memory, the memory stores a program, and when program instructions stored in the memory are executed by the processor, steps of the method according to any one of claims 1 to 10 are implemented.

26. A three-dimensional model generation apparatus, comprising a processor, wherein the processor is coupled to a memory, the memory stores a program, and when program instructions stored in the memory are executed by the processor, steps of the method according to claim 11 or 12 are implemented.

27. A computer-readable storage medium, comprising a program, wherein when the program is executed by a processing unit, steps of the method according to any one of claims 1 to 12 are performed.

28. A computer program product, wherein the computer program product comprises software code, and the software code is used to perform steps of the method according to any one of claims 1 to 12.

FIG. 1

Server cluster 310

Three-dimensional
construction network

Communication network

Terminal
301

For example

FIG. 2

$$(x, y, z, \theta, \phi)$$

Spatial   Viewing
location  direction

Fully-connected network $F_\Omega$

$$(r, g, b, \sigma)$$

Color    Volume
estimation  density
estimation

FIG. 3

Ray

Point cloud data

Camera

FIG. 4

Obtain a plurality of frames of images and a photographing parameter — 501

Obtain radar point cloud data — 502

Obtain a three-dimensional construction network through training based on the plurality of frames of images, the photographing parameter, and the radar point cloud data — 503

FIG. 5

Input images from a plurality of views

SFM algorithm

RGB point cloud data

1. Track-based virtual camera generation

3. Network structure in which geometric estimation and color estimation are decoupled

**Hash-Grid Encoder**

**Sigma MLP**
$\sigma_{coarse}$

**RGB MLP**
$\vec{C}_{coarse}$

$\sigma_{fine}$

**Sigma MLP***
$\vec{C}_{fine}$

**RGB MLP***

2. Deep supervision based on a fused point cloud

4. Stereoscopic vision reprojection error estimated based on geometric consistency

Geometric consistency

Depth estimation consistency

RGB      RGB

FIG. 6

EP 4 672 160 A1

Training image → SFM → Tracks

Key point that appears in both previous and current frames

Real view$_t$, Real view$_{t+1}$ → Interpolation → Virtual view$_i$

Projection → Virtual view image$_i$

FIG. 7

Co-view assumption → → → Virtual camera view

FIG. 8

Input images    SFM algorithm    Dense reconstruction

Point cloud alignment

Fused point cloud

Input data    Accumulated point cloud

FIG. 9

FIG. 10

FIG. 11

FIG. 12

Obtain input view information 〜 1301

Output a three-dimensional model by using the input view information as an input of a three-dimensional construction network 〜 1302

FIG. 13

Three-dimensional construction network training apparatus

〜 1401

Image capture module

〜 1402

Radar capture module

〜 1403

Processing module

〜 1405

Output module

〜 1404

Input module

FIG. 14

Three-dimensional model generation apparatus

〜 1501

Input module

〜 1502

Output module

〜 1503

Training module

FIG. 15

1601

Processor

1602

Memory

1603

Transceiver

FIG. 16

1701

Processor

1702

Memory

1703

Transceiver

FIG. 17

FIG. 18

# INTERNATIONAL SEARCH REPORT

| | International application No. |
|---|---|
| | **PCT/CN2024/082859** |

**A.    CLASSIFICATION OF SUBJECT MATTER**

G06T17/20(2006.01)i

According to International Patent Classification (IPC) or to both national classification and IPC

**B.    FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS: CNTXT; DWPI; VEN; USTXT; WOTXT; EPTXT; CNKI; IEEE; 万方, WANFANG; 百度, BAIDU; 必应, BING: 三维, 训练, 图像, 视角, 雷达, 深度, 虚拟, 插值, 几何, 色彩, 3D, training, image, viewing angle, radar, depth, virtual, interpolation, geometry, colour

**C.    DOCUMENTS CONSIDERED TO BE RELEVANT**

| Category* | Citation of document, with indication, where appropriate, of the relevant passages | Relevant to claim No. |
|---|---|---|
| PX | CN 116486038 A (HUAWEI TECHNOLOGIES CO., LTD.) 25 July 2023 (2023-07-25)<br>claims 1-28, and description, paragraphs 125-251, and figures 1-18 | 1-28 |
| Y | CN 115690324 A (GUANGZHOU ZHONGSI ARTIFICIAL INTELLIGENCE TECHNOLOGY CO., LTD.) 03 February 2023 (2023-02-03)<br>description, paragraphs 2-88 and 97-191, and figures 1-4 | 1-6, 9-11, 13-18, 21-23, 25-28 |
| Y | CN 111223135 A (GM GLOBAL TECHNOLOGY OPERATIONS LLC) 02 June 2020 (2020-06-02)<br>description, paragraphs 33-73, and figures 1-8 | 1-6, 9-11, 13-18, 21-23, 25-28 |
| Y | JP 2005080015 A (SONY CORP.) 24 March 2005 (2005-03-24)<br>description, paragraphs 33-60 | 2-6, 14-18 |
| Y | US 2022357441 A1 (QUALCOMM INCORPORATED) 10 November 2022 (2022-11-10)<br>description, paragraphs 28-98, and figures 1-8 | 1-6, 9-11, 13-18, 21-23, 25-28 |
| A | CN 112132972 A (LYNMAX (BEIJING) TECHNOLOGY CO., LTD.) 25 December 2020 (2020-12-25)<br>entire document | 1-28 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **04 June 2024** | **15 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/082859**

| Patent document cited in search report | | | Publication date (day/month/year) | Patent family member(s) | | | Publication date (day/month/year) |
|---|---|---|---|---|---|---|---|
| CN | 116486038 | A | 25 July 2023 | None | | | |
| CN | 115690324 | A | 03 February 2023 | None | | | |
| CN | 111223135 | A | 02 June 2020 | US | 2020167941 | A1 | 28 May 2020 |
| | | | | US | 10861176 | B2 | 08 December 2020 |
| | | | | DE | 102019115874 | A1 | 28 May 2020 |
| | | | | CN | 111223135 | B | 30 April 2024 |
| JP | 2005080015 | A | 24 March 2005 | JP | 4903358 | B2 | 28 March 2012 |
| US | 2022357441 | A1 | 10 November 2022 | WO | 2022241345 | A1 | 17 November 2022 |
| | | | | KR | 20240006531 | A | 15 January 2024 |
| | | | | TW | 202244537 | A | 16 November 2022 |
| | | | | BR | 112023022907 | A2 | 23 January 2024 |
| | | | | EP | 4337984 | A1 | 20 March 2024 |
| | | | | IN | 202327064644 | A | 19 January 2024 |
| | | | | CN | 117280246 | A | 22 December 2023 |
| CN | 112132972 | A | 25 December 2020 | CN | 112132972 | B | 22 March 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310310058